# EUROPÄISCHE PATENTSCHRIFT

(11) **EP 0 799 745 B1**
(45) Veröffentlichungstag und Bekanntmachung des Hinweises auf die Patenterteilung: **04.09.2002**
(21) Anmeldenummer: 97104747.7
(22) Anmeldetag: 20.03.1997
(51) Int. Cl.: B60R 1/06

(54) **Nutzfahrzeug-Aussenspiegelanordnung**
Exterior mirror for an utilty vehicle
Rétroviseur extérieur pour un véhicule utilitaire

(30) Priorität: 06.04.1996 DE 19613883
(43) Veröffentlichungstag der Anmeldung: 08.10.1997
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE); Popp, Albrecht, 91629 Weihenzell (DE)
(74) Vertreter: Hübner, Gerd, Dipl.-Phys.

(56) Entgegenhaltungen:
- EP-A- 0 374 978
- DE-A- 2 250 004
- DE-A- 2 535 940
- DE-B- 1 090 986
- FR-A- 2 093 271
- GB-A- 1 223 919
- GB-A- 1 339 124
- GB-A- 1 434 361
- US-A- 3 371 903
- US-A- 4 077 597

## Beschreibung

Die Erfindung betrifft eine Nutzfahrzeug-Außenspiegelanordnung mit den im Oberbegriff des Anspruches 1 angegebenen Merkmalen, wie z.B. aus US-A-3 371 903 bekannt ist.

Solche herkömmlichen Außenspiegelanordnungen für LKW weisen einen an der Karosserie befestigten, seitlich abstehenden Halter auf, der in der Regel als U-förmiger Bügel einen unteren und oberen, horizontal verlaufenden Lagerarm aufweist, die mit ihren freien Enden um eine vertikale Achse schwenkbar an der Karosserie angelenkt sind. An dem vertikal verlaufenden Basis-Abschnitt des U-förmigen Bügels sind ein oder mehrere Außenspiegel - z.B. ein nur leicht konvexer Hauptspiegel und ein stark konvexer Weitwinkelspiegel - angebracht.

Ein grundsätzliches Problem bei Nutzfahrzeug-Außenspiegelanordnungen liegt darin, daß aufgrund der relativ großen Abmessungen und eines entsprechenden Gewichtes dieser Außenspiegel der Halter sehr stabil und schwingungsfrei gelagert sein muß, um möglichen Vibrationen vorzubeugen.

Um hier eine Verbesserung zu erreichen, ist es bereits bekannt, eine Abstütztraverse vorzusehen, die den Halter zusätzlich stabilisiert. Diese Abstütztraverse ist an ihrem einen Ende mit dem Lagerarm an einem weit vom Schwenklager nach außen verlegten Punkt gekoppelt. Mit ihrem anderen Ende ist die Abstütztraverse an der Karosserie in einem etwa einen halben Meter hinter dem Anbringungsort des Spiegelhalters liegenden Punkt angelenkt. Der mit der Abstütztraverse gekoppelte Lagerarm des Halters, die Karosseriestruktur und die Abstütztraverse selbst bilden eine starre Dreiecksabstützung, aufgrund derer der Halter stabilisiert wird.

In bestimmten Situationen muß nun der Halter mit den Außenspiegeln nach innen zur Karosserie hin eingeschwenkt werden, z.B. wenn eine sehr enge Passage durchfahren oder ein LKW länger abgestellt werden soll. Durch das Einklappen wird der Spiegel vor Beschädigungen geschützt.

Ferner muß es auch möglich sein, daß der Halter mit dem oder den Außenspiegeln nach innen nachgeben kann, wenn sich beispielsweise entgegenkommende LKW mit den Spiegeln touchieren.

Um der vorstehend geschilderten Problematik gerechtzuwerden, ist die Kopplung zwischen der Abstützstange und dem entsprechenden Lagerarm lösbar ausgestaltet. Durch eine Lösung der Kopplung entfällt die Abstützung des Halters durch die Abstützstange. Der Halter kann nach innen schwenken.

Bekannte lösbare Kopplungen zwischen der Abstütztraverse und dem Lagerarm sind oftmals nur schwer und mühselig wieder einzukoppeln. Darüber ist die Anlenkung der Abstütztraverse an ihrem karosserieseitigen Ende in der Regel so ausgestaltet, daß die Abstütztraverse nach einer Lösung vom Lagerarm nach unten fällt und in einer vertikalen Stellung hängenbleibt.

Der Erfindung liegt demzufolge die Aufgabe zugrunde, eine Nutzfahrzeug-Außenspiegelanordnung der gattungsgemäßen Art hinsichtlich ihrer lösbaren Kopplung zwischen Abstütztraverse und Lagerarm so zu verbessern, daß die Kopplung bei stabilen Abstützverhältnissen zuverlässig auslöst, dabei jedoch einfach und bequem wieder herstellbar ist.

Diese Aufgabe wird durch die im Kennzeichnungsteil des Anspruches 1 angegebenen Merkmale gelöst. Durch die im wesentlichen quer zur Längsrichtung des Lagerarms darin verlaufende, an den Enden offene Aufnahmenut für einen Verbindungskopf an der Abstütztraverse kann bei einer Verschwenkung des Lagerarmes der unter Reibschluß in die Aufnahmenut eingreifende Verbindungskopf je nach Schwenkrichtung vorne oder hinten aus der Aufnahmenut austreten und die Kopplung zwischen diesen beiden Teilen lösen. Durch den komplementären, schwalbenschwanzartig ineinandergreifenden Querschnitt der Aufnahmenut bzw. des Verbindungskopfes wird ein hoher Reibschluß zwischen den beiden Kopplungspartnern und eine Auslösung ausschließlich in dem gewünschten Freiheitsgrad erzielt.

Zum Wiederherstellen der Kopplung genügt es ferner, den Verbindungskopf einfach in die Aufnahmenut wieder einzuschieben.

Durch die im Anspruch 2 angegebene Vorspannung der Schenkel des längs-geteilten Verbindungskopfes wird die Stabilität der Kopplung verbessert.

Die im Anspruch 3 angegebenen Fixiervorsprünge legen das Elastikteil im Verbindungskopf fest, so daß ein Herausfallen beispielsweise nach einer Lösung der Kopplung vermieden wird.

Durch den im Anspruch 4 angegebenen Querschnittsverlauf der Aufnahmenut wird ein örtlich konzentrierter und damit eine hohe Kopplungskraft erbringender Reibschluß zwischen den Kopplungspartnern hervorgerufen. Ferner kann sich durch diesen Verlauf der Verbindungskopf in begrenztem Maße quer zur Längsrichtung innerhalb der Aufnahmenut verschwenken, was bei der gegenläufigen Verschwenkung von Lagerarm und Verbindungskopf während eines Auslösens der Kopplung - beispielsweise bei einem gewaltsamen Einschwenken des Spiegelhalters - einem ungehinderten und schonenden Auslösen der Reibschlußverbindung zugute kommt.

Durch die Ausgestaltung nach Anspruch 5 wird ein Herunterfallen der Abstütztraverse im ausgelösten Zustand der Kopplung mit dem Haltearm vermieden. Dies erleichtert die Wiederherstellung der Kopplung.

Anspruch 6 dient der konstruktiven Vereinfachung der Außenspiegelanordnung dahingehend, daß ein in der Regel ohnehin vorhandener Lagerbock, nämlich der für den Rampenspiegel, zur Befestigung der Abstütztraverse verwendet wird.

Anspruch 7 kennzeichnet eine praktisch besonders relevante Ausführungsform der Erfindung.

Die im Anspruch 8 angegebenen warzenförmigen Rastvorsprünge im Bereich der Aufnahmenut bewirken eine zusätzliche Fixierung des unter Reibschluß in die Aufnahmenut eingreifenden Verbindungskopfes. Damit wird die Stabilität der Verbindung zwischen dem Spiegelhalter und der Abstütztraverse verbessert.

Weitere Merkmale, Einzelheiten und Vorteile der Erfindung sind der nachfolgenden Beschreibung entnehmbar, in der ein Ausführungsbeispiel des Erfindungsgegenstandes anhand der beigefügten Zeichnungen näher erläutert wird. Es zeigen:
- Fig. 1: eine Seitenansicht einer Außenspiegelanordnung von der Karosserieseite her,
- Fig. 2: eine Draufsicht auf die Spiegel-Anordnung gemäß Fig. 1 im gekoppelten Zustand der Abstütztraverse,
- Fig. 3: einen Schnitt entlang der Schnittlinie III-III nach Fig. 2,
- Fig. 4: eine Draufsicht auf die Spiegel-Anordnung gemäß Fig. 1 in ausgelöstem Zustand der Abstütztraverse,
- Fig. 5: einen Schnitt entlang der Schnittlinie IV-IV nach Fig. 4,
- Fig. 6: eine teilweise längsgeschnittene Seitenansicht einer Abstütztraverse mit Lagerbock zur Karosseriebefestigung,
- Fig. 7: eine teilweise geschnittene Draufsicht der Abstütztraverse,
- Fig. 8: eine Seitenansicht des Verbindungskopfes der Abstütztraverse aus Pfeilrichtung VIII nach Fig. 7,
- Fig. 9: eine Ansicht des Verbindungskopfes aus Pfeilrichtung IX-IX nach Fig. 8,
- Fig. 10: einen Querschnitt durch den Verbindungskopf entlang der Schnittlinie X-X nach Fig. 6 bzw. 8 und
- Fig. 11: eine Teildraufsicht auf einen Lagerarm der Spiegel-Anordnung mit einer Aufnahmenut in einer zweiten Ausführungsform, und
- Fig. 12: einen Schnitt entlang der Geraden XII-XII nach Fig. 11.

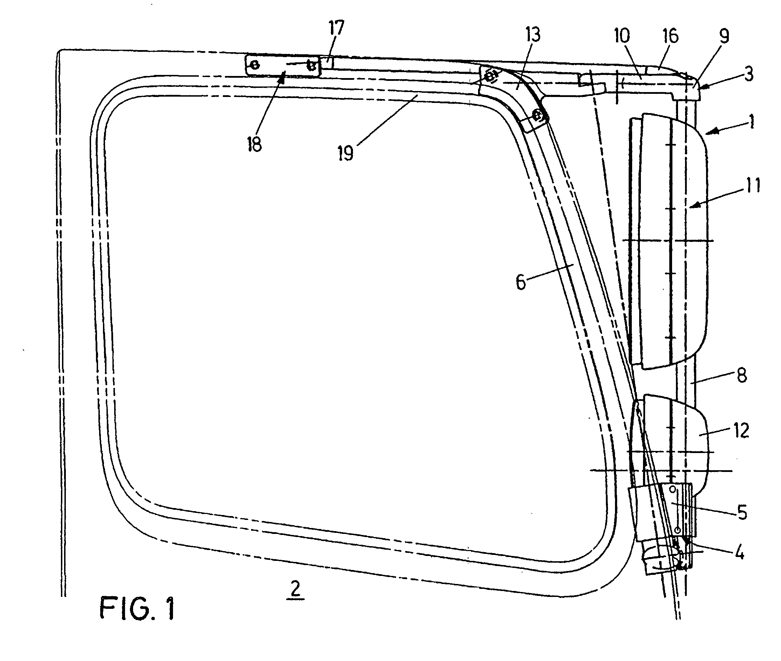

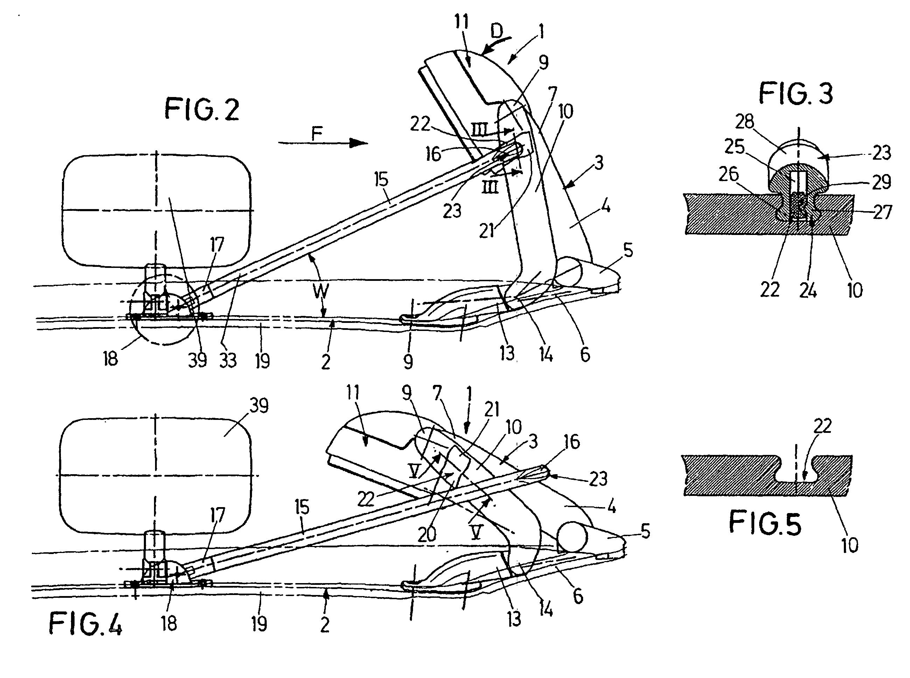

In den Fig. 1 und 2 ist die Außenspiegelanordnung 1 gezeigt, wie sie im Bereich der (lang/kurz-strichliert angedeuteten) Fahrertür 2 eines LKW angebracht ist. Die Außenspiegelanordnung weist als Hauptteil einen seitlich abstehenden Halter 3 auf, der als im wesentlichen U-förmiger Bügel ausgebildet ist. Dessen untenliegender, horizontal angeordneter U-Schenkelarm ist als unterer Lagerarm 4 in einem Lagerbock 5 schwenkbar angelenkt, der im Bereich des unteren Endes des vorderen Fensterholms 6 befestigt ist. Am freien Ende 7 des unteren Lagerarms 4 ist eine die Basis des Halters 3 bildende Spiegelstange 8 angeordnet, die im wesentlichen vertikal nach oben verläuft und dort mit dem freien Ende 9 des zweiten oberen Lagerarmes 10 des Halters 3 verbunden ist. An der Spiegelstange 8 sitzt ein Hauptspiegel 11 und ein Weitwinkelspiegel 12. Beide Spiegel 11, 12 bedürfen keiner näherer Beschreibung, da ihr Aufbau und ihre Befestigung an der Spiegelstange 8 üblich und nicht erfindungswesentlich sind.

Der obere Lagerarm 10 ist am oberen Ende des vorderen Fensterholms 6 in einem weiteren Lagerbock 13 angelenkt. Die Anlenkung des Halters 3 mit seinem oberen und unteren Lagerarm 4 ist dabei so gewählt, daß er um eine im wesentlichen vertikale, leicht nach hinten geneigte Schwenkachse 14 aus der in Fig. 2 gezeigten Grundposition zur Karosserie hin einklappbar ist. Dabei versteht sich, daß die Anlenkung der Lagerarme 4, 10 in den Lagerböcken 5, 13 so erfolgt, daß aus der in Fig. 1 und 2 gezeigten Grundstellung nur bei Auftreten eines bestimmten Drehmoments am Halter 3 ein Einklappen erfolgt.

Zur Stabilisierung des Halters 3 insbesondere gegen Vibrationen und unbeabsichtigtes Einklappen dient die in der Draufsicht nach Fig. 2 gut erkennbare Abstütztraverse 15, deren vorderes Ende 16 mit dem oberen Lagerarm 10 kurz vor dessen freien Ende 9 lösbar gekoppelt ist. Mit ihrem hinteren Ende 17 ist die Abstütztraverse 15 in einem weiteren Lagerbock 18 angelenkt, der am oberen Fensterholm 19 der Fahrertür 2 angebracht ist. Die Abstütztraverse 15 verläuft im wesentlichen horizontal und in einem sich entgegen der Fahrtrichtung F nach außen öffnenden spitzen Winkel W.

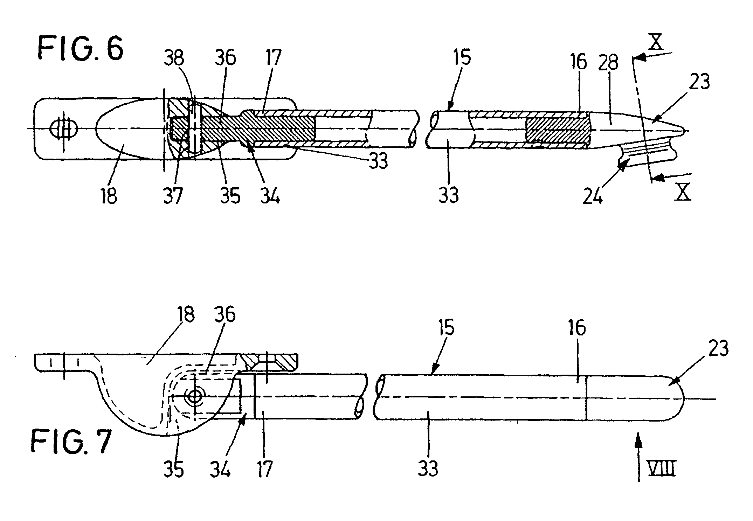

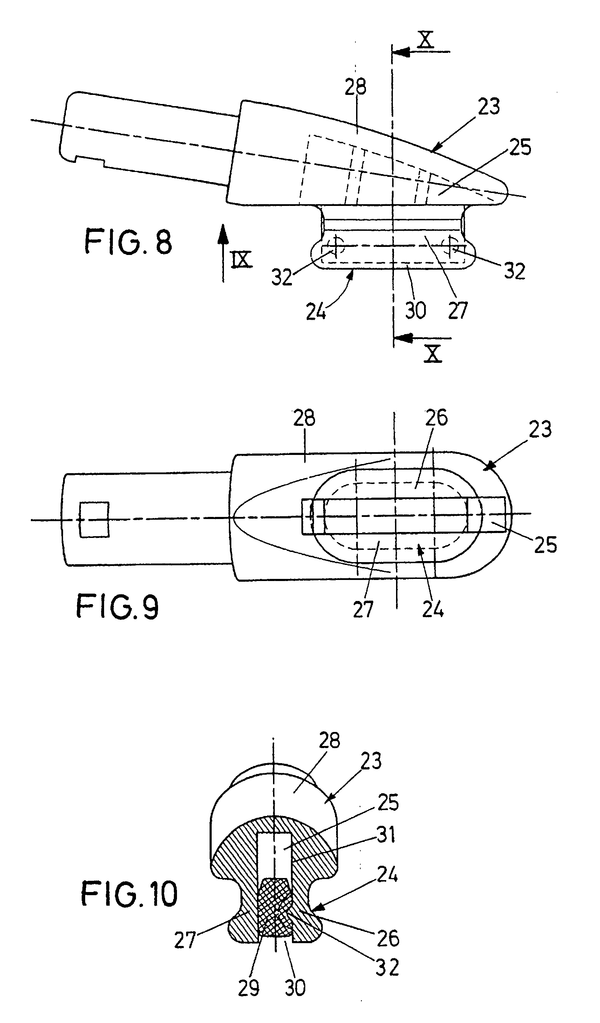

Wie aus den Fig. 2, 3 und 6 bis 10 besonders deutlich wird, ist die lösbare Kopplung zwischen Abstütztraverse 15 und dem oberen Lagerarm 10 einerseits durch eine im wesentlichen quer zur Längsrichtung des Lagerarmes 10 darin verlaufende, an ihren Enden 20, 21 offene Aufnahmenut 22 und andererseits einen in diese Nut unter Reibschluß eingreifenden Verbindungskopf 23 am vorderen Ende 16 der Abstütztraverse 15 gebildet. Wie aus Fig. 5 erkennbar ist, weisen die Aufnahmenut 22 und das Eingriffsteil 24 des Verbindungskopfes 23 einen komplementären, schwalbenschwanzartig ineinandergreifenden Querschnitt auf. Das in Draufsicht langlochförmige Eingriffsteil 24 ist dabei durch eine Längsausnehmung 25 in zwei Schenkel 26, 27 längsgeteilt (Fig. 8 bis 10). Diese Längsausnehmung 25 erstreckt sich vom eigentlichen Eingriffsteil 24 bis hinein in den Sockel 28 des Verbindungskopfes 23. In der Längsausnehmung 25 sitzt ein etwa deren Länge und halbe Tiefe einnehmendes, blockförmiges Elastikteil 29 aus gummielastischem Werkstoff, mit dem die beiden Schenkel 26, 27 nach außen vorgespannt werden. Zur Fixierung des Elastikteils 29 in der Längsausnehmung 25 in der Weise, daß das Elastikteil 29 vor der Offenseite 30 der Längsausnehmung 25 zu liegen kommt, weist die innere Seitenwand 31 des Schenkels 26 vor ihren Längsenden jeweils einen warzenförmigen Fixiervorsprung 32 auf, der das Elastikteil 29 praktisch punktuell beaufschlagt und zusätzlich fixiert.

Wie in Fig. 4 angedeutet ist, verjüngt sich die Aufnahmenut 22 des Lagerarmes 10 von ihren beiden Enden 20, 21 ausgehend zur Mitte hin in ihrer Querschnittsbreite. Dies bedeutet, daß der optimale Reibschluß und damit die optimale Kopplung zwischen dem Eingriffsteil 24 des Verbindungskopfes 22 und der Aufnahmenut 22 im oberen Lagerarm 10 dann erreicht ist, wenn die "Taille" der Aufnahmenut 22 mittig zwischen den beiden Fixiervorsprüngen 32 liegt, was auch einen gewissen Rasteffekt mit sich bringt.

Im übrigen ist der Verbindungskopf 23 ein aus Kunststoff spritzgegossenes Teil, das in die vordere Öffnung des als Aluminium-Ovalrohr ausgebildeten Schaftes 33 der Abstütztraverse 15 eingepreßt ist.

Am hinteren Ende 17 der Abstütztraverse 15 ist ebenfalls ein aus Kunststoff spritzgegossenes Schwenklagerteil 34 vorgesehen, das wiederum in den Schaft 33 eingepreßt ist. In dem Lagerbock 18 ist eine horizontale, schlitzförmige Ausnehmung 35 vorgesehen, in die eine Lasche 36 am Schwenklagerteil 34 eingesetzt ist. Im Lagerbock 18 und in der Lasche 36 sind fluchtende Lagerbohrungen 37 vorgesehen, die ein Schwenkstift 38 durchsetzt. Durch die vorstehende Konstruktion kann die Abstütztraverse 15 im wesentlichen nur in der Horizontalebene schwenken, nicht jedoch nach unten wegfallen.

Wie aus Fig. 2 und 4 deutlich wird, ist am Lagerbock 18 gleichzeitig ein sogenannter Rampenspiegel 39 angebracht, der in Fig. 6 und 7 der Übersichtlichkeit halber weggelassen wurde.

Aus einem Vergleich der Fig. 2 und 4 wird der Schwenk- und Auslösemechanismus zwischen Halter 3 und Abstütztraverse 15 deutlich. In der in Fig. 2 gezeigten Grundstellung stützt - wie erläutert - die Traverse 15 den Halter 3 ab und stabilisiert diesen. Sobald ein Drehmoment D entgegen der Fahrtrichtung F auf den Halter 3 wirkt und das in der Schwenkachse 14 der Lagerböcke 5 und 13 wirkende Gegenmoment sowie die aufgrund des Reibschlusses zwischen dem Verbindungskopf 23 der Abstütztraverse 15 und dem oberen Lagerarm 10 wirkende Reibkraft überwindet, gleitet das Eingriffsteil 24 des Verbindungskopfes 23 aus der Aufnahmenut 22 nach vorne heraus und der Halter kann mit den Spiegeln 11, 12 in die Fig. 4 gezeigte, eingeklappte Stellung verschwenken. Die Abstütztraverse 15 liegt dabei auf der Oberseite des oberen Lagerarmes 10 auf.

Um die Außenspiegelanordnung 1 wieder in ihren Grundstellung wieder zu verbringen, braucht lediglich der Halter 3 wieder in die Fig. 2 gezeigte Stellung ausgeklappt und gleichzeitig das Eingriffsteil 24 in die Aufnahmenut 22 eingefädelt zu werden, was aufgrund der sich zur Mitte hin verjüngenden Ausgestaltung der Aufnahmenut 22 sehr einfach bewerkstelligbar ist.

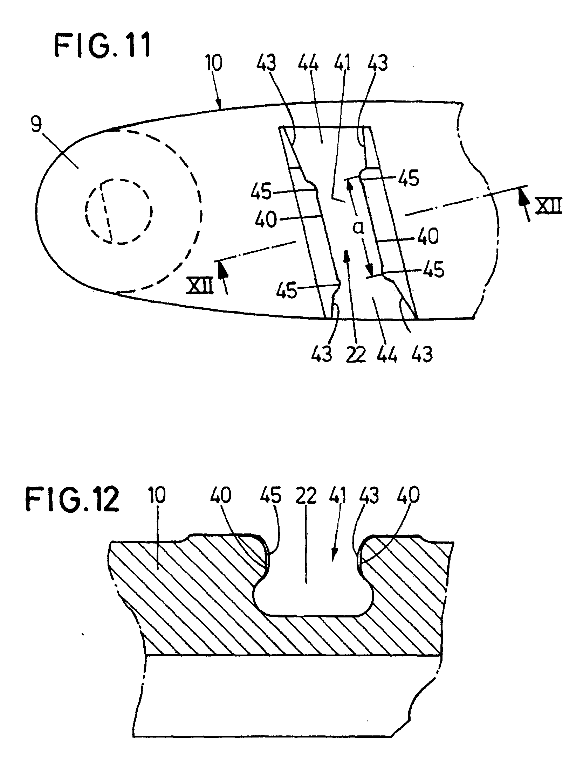

In den Fig. 11 und 12 ist eine konstruktive Weiterbildung der Aufnahmenut 22 dargestellt, die einer zusätzlichen Stabilisierung der Reibschluß-Verbindung zwischen der Aufnahmenut 22 und dem Verbindungskopf 23 des Eingriffsteils 24 dient. Sie ist die Aufnahmenut 22 aufgrund der Schwalbenschwanz-Verbindung mit Seitenflanken 40 längs ihrer Nutöffnung 41 versehen, die in die Schwalbenschwanz-Hinterschneidungen 42 (s. z.B. Fig. 10) eingreifen. Diese Seitenflanken 40 erstrecken sich etwa über die Hälfte der Länge der Aufnahmenut 22 in Fig. 11, wobei sich beidseitig daran Schrägflanken 43 anschließen, so daß ganz allgemein wieder eine sich verjüngende Form der Aufnahmenut 22 entsprechend dem Ausführungsbeispiel der Fig. 1 bis 10 verwirklicht ist. Im Übergangsbereich zwischen den Schrägflanken 43 und den geraden Seitenflanken 40 - also vor den beiden Längsenden 44 der Aufnahmenut 22 - sind die Seitenflanken 40 jeweils mit warzenförmigen Rastvorsprüngen 45 versehen, die jedoch nur zwischen 0,5 und 1 mm von den Seitenflanken 40 aus von der Seite her in die Nutöffnung 41 hineinragen. Der Längsabstand a der Rastvorsprünge 45 ist dabei so ausgelegt, daß zwischen diesen Rastvorsprüngen im gekoppelten Zustand zwischen Lagerarm 10 und Abstütztraverse 15 der Fuß 46 (Fig. 8 und 10) des Eingriffsteils 24 zwischen diesen Rastvorsprüngen 45 in zumindest geringem Maße einrastet.

## Patentansprüche

1. Nutzfahrzeug-Außenspiegelanordnung mit
- einem an der Karosserie (2) befestigten, seitlich abstehenden Halter (3), der mindestens einen horizontal verlaufenden, um eine etwa vertikale Achse (14) schwenkbar an der Karosserie (2) angelenkten Lagerarm (10) aufweist,
- mindestens einem Außenspiegel (11, 12), der an dem Halter (3) angebracht ist, und
- einer Abstütztraverse (15), die am einen Ende mit dem Lagerarm (10) lösbar gekoppelt und mit dem anderen Ende zur Stabilisation des Halters (3) an der Karosserie (2) angelenkt ist,
**dadurch gekennzeichnet, daß**
die lösbare Kopplung zwischen Abstütztraverse (15) und Lagerarm (10) durch eine im wesentlichen quer zur Längsrichtung des Lagerarmes (10) darin verlaufende, an den Enden (20, 21) offene Aufnahmenut (22) und einem in diese unter Reibschluß eingreifenden Verbindungskopf (23) der Abstütztraverse (15) gebildet ist, wobei Aufnahmenut (22) und Verbindungskopf (23) einen komplementären, schwalbenschwanzartig ineinandergreifenden Querschnitt aufweisen.

2. Außenspiegelanordnung nach Anspruch 1, **dadurch gekennzeichnet, daß** ein in die Aufnahmenut (22) einschiebbares Eingriffsteil (24) des Verbindungskopfes (23) durch eine Längsausnehmung (25) in zwei Schenkel (26, 27) längsgeteilt ist, die durch ein in der Längsausnehmung (25) sitzendes Elastikteil (29) in Querrichtung nach außen vorgespannt sind.

3. Außenspiegelanordnung nach Anspruch 2, **dadurch gekennzeichnet, daß** mindestens einer der beiden Schenkel (26, 27) des Verbindungskopfes (23) an seiner die Längsausnehmung (25) begrenzenden Seitenwand (31) mit mindestens einem Fixiervorsprung (32) für das Elastikteil (29) versehen ist.

4. Außenspiegelanordnung nach einem der Ansprüche 1 bis 3, **dadurch gekennzeichnet, daß** sich die Aufnahmenut (22) des Lagerarms (10) von ihren beiden Enden (20, 21) ausgehend zur Mitte hin in der Querschnittsbreite verjüngt.

5. Außenspiegelanordnung nach einem der Ansprüche 1 bis 4, **dadurch gekennzeichnet, daß** das an der Karosserie angelenkte Ende (17) der Abstütztraverse (15) in einen Lagerbock (18) um eine vertikale Achse (38) schwenkbar gehalten ist.

6. Außenspiegelanordnung nach Anspruch 5, **dadurch gekennzeichnet, daß** der Lagerbock (18) gleichzeitig einen Rampenspiegel (39) trägt.

7. Außenspiegelanordnung nach einem der Ansprüche 1 bis 6, **dadurch gekennzeichnet, daß** der Halter (3) als im wesentlichen U-förmiger Bügel ausgebildet ist, dessen vertikal verlaufendes U-Basisteil (8) zur Anbringung eines oder mehrerer Außenspiegel (11, 12) dient und dessen beiden horizontal angeordneten U-Schenkelarme einem unteren und oberen Lagerarm (4, d, 10) bilden und mit ihren Enden an der Fahrzeugkarosserie (2) um eine im wesentlichen vertikale Achse (14) schwenkbar abgelenkt sind, wobei die Aufnahmenut (22) für die Abstütztraverse (15) in die Oberseite des oberen Lagerarmes (10) eingeformt ist.

8. Außenspiegelanordnung nach einem der Ansprüche 1 bis 7, **dadurch gekennzeichnet, daß** die Aufnahmenut (22) im Bereich ihrer stegförmigen, in die Schwalbenschwanz-Hinterschneidungen (42) eingreifenden Seitenflanken (40) vor beiden Längsenden (44) mit warzenförmigen RastvorSprüngen (45) versehen ist.

## Claims

1. A commercial vehicle mirror arrangement comprising
- a laterally extending holder (3) affixed to the body (2), which exhibits at least one horizontally running support arm (10) turning about a vertical axis (14) and swivably mounted on the body (2),
- at least one external mirror (11, 12) which is installed on the holder (3) and
- a tie-bar (15) which is releasably coupled at one end with the support arm (10) and is linked to the body (2) with the other end for the stabilization of the holder (3),
**characterized in that**
the releasable coupling between tie-bar (15) and support arm (10) is formed by means of a receiving groove (22) having open ends (20, 21) and running in said support arm (10) in a generally angular direction to the longitudinal axis of said support arm (10) and also by means of a connection head (23) of the tie-bar (15) retained by frictional force in said groove (22), wherein receiving groove (22) and the connection head (23) show a matching, dovetailed, interlocking cross section.

2. An external mirror arrangement according to claim 1, **characterized in that** an insertable holding part (24) of the connection head (23) disposed in the receiving groove (22) is longitudinally divided into two legs (26, 27) by a lengthwise recess (25) which are outwardly and angularly pretensioned by a elastic block (29) in the lengthwise recess (25).

3. An external mirror arrangement according to claim 2, **characterized in that** at least one of the two legs (26, 27) of the connection head (23), on its side wall (31) which borders the lengthwise recess (25) is provided with a positioning projection (32) for the elastic block (29).

4. An external mirror arrangement according to one of claims 1 to 3, **characterized in that** the cross width of the receiving groove (22) of the support arm (10) is tapering inward from the two ends thereof (20, 21) to its midpoint.

5. An external mirror arrangement according to one of claims 1 to 4, **characterized in that** the tie-bar (15) on its end (17) linked to the body, is secured in a support base (18) and can swivel about a vertical axis (38).

6. An external mirror arrangement according to claim 5, **characterized in that** the support base (18) simultaneously carries a ramp mirror (39).

7. An external mirror arrangement according to one of claims 1 to 6, **characterized in that** the holder (3) is designed as a generally U-formed yoke, the vertically running base of the U of which serves for the installation of one or more external mirrors (11, 12) and of which the two straight arms of the U form a lower (4) and upper (10) support arm and are affixed to the vehicle side (2) by their ends to swivel about a substantially vertical axis (14), whereby the receiving groove (22) for the tie-rod (15) is formed in the upper side of the upper support arm 10.

8. An external mirror arrangement according to one of claims 1 to 7, **characterized in that** the receiving groove (22) before its longitudinal ends (44) is provided with dimpling retaining projections (45) in the area of its web shaped flanks (40) which extend into the back cut dovetail recesses (42).

## Revendications

1. Agencement de rétroviseur extérieur pour un véhicule utilitaire, comportant
- une monture (3) fixée sur la carrosserie (2) et dépassant latéralement, qui comprend au moins un bras de montage (10) s'étendant horizontalement et articulé sur la carrosserie (2) de façon mobile en pivotement autour d'un axe (14) approximativement vertical,
- au moins un rétroviseur extérieur (11, 12) qui est agencé sur la monture (3),
- une traverse d'appui (15) qui est accouplée à une extrémité de façon détachable avec le bras de montage (10) et qui est articulée à l'autre extrémité sur la carrosserie (2) pour stabiliser la monture (3),
**caractérisé en ce que**
l'accouplement détachable entre la traverse d'appui (15) et le bras de montage (10) est formé par une rainure de réception (22) s'étendant sensiblement perpendiculairement à la direction longitudinale du bras de montage (10) dans celui-ci et ouverte aux extrémités (20, 21), et par une tête de liaison (23), s'engageant par coopération de friction dans ladite rainure, de la traverse d'appui (15), la rainure de réception (22) et la tête de liaison (23) présentant des sections complémentaires imbriquées en forme de queue d'aronde.

2. Agencement de rétroviseur extérieur selon la revendication 1, **caractérisé en ce qu'**une partie d'engagement (24), susceptible d'être introduite dans la rainure de réception (22), de la tête de liaison (23) est subdivisée longitudinalement par un évidement longitudinal (25) en deux branches (26, 27) qui sont précontraintes en direction transversale vers l'extérieur par une pièce élastique (29) reposant dans l'évidement longitudinal (25).

3. Agencement de rétroviseur extérieur selon la revendication 2, **caractérisé en ce qu'**une au moins des deux branches (26, 27) de la tête de liaison (23) est pourvue, sur sa paroi latérale (31) délimitant l'évidement longitudinal (25), d'au moins une saillie de fixation (32) pour la pièce élastique (29).

4. Agencement de rétroviseur extérieur selon l'une des revendications 1 à 3, **caractérisé en ce que** la rainure de réception (22) du bras de montage (10) va en se rétrécissant quant à la largeur de sa section à partir de ses deux extrémités (20, 21) vers le milieu.

5. Agencement de rétroviseur extérieur selon l'une des revendications 1 à 4, **caractérisé en ce que** l'extrémité (17), articulée sur la carrosserie, de la traverse d'appui (15) est retenue dans un bloc support (18) de manière à pouvoir pivoter autour d'un axe vertical (38).

6. Agencement de rétroviseur extérieur selon la revendication 5, **caractérisé en ce que** le bloc support (18) porte simultanément un rétroviseur de rampe (39).

7. Agencement de rétroviseur extérieur selon l'une des revendications 1 à 6, **caractérisé en ce que** la monture (3) est réalisée sous la forme d'un étrier sensiblement en forme de U dont la partie de base (8) du U s'étendant verticalement sert à agencer un ou plusieurs rétroviseurs extérieurs (11, 12), et dont les deux branches du U agencées horizontalement forment un bras de montage inférieur et un bras de montage supérieur (4, d, 10) et sont articulées par leurs extrémités sur la carrosserie de véhicule (2) de façon mobile en pivotement autour d'un axe sensiblement vertical (14), la rainure de réception (22) pour la traverse d'appui (15) étant ménagée dans la face supérieure du bras de montage supérieur (10).

8. Agencement de rétroviseur extérieur selon l'une des revendications 1 à 7, **caractérisé en ce que** la rainure de réception (22) est pourvue, dans la zone de ses flancs latéraux (40) en forme de barrettes s'engageant dans les contre-dépouilles en queue d'aronde (42), de saillies d'enclenchement (45) en forme de tétons en avant des deux extrémités longitudinales (44).
